# EUROPEAN PATENT APPLICATION

(11) **EP 4 447 525 A1**
(43) Date of publication of application: **16.10.2024**
(21) Application number: 22923266.5
(22) Date of filing: 23.08.2022
(51) Int. Cl.: H04W 24/02

(54) **METHOD AND APPARATUS FOR ADJUSTING NETWORK SLICE**

(30) Priority: 30.01.2022 CN 202210114213
(71) Applicant: Huawei Technologies Co., Ltd., Shenzhen, Guangdong 518129 (CN)
(72) Inventor: JIA, Xiaoqian, Shenzhen, Guangdong 518129 (CN); XING, Xiaocheng, Shenzhen, Guangdong 518129 (CN); SU, Zijian, Shenzhen, Guangdong 518129 (CN)
(74) Representative: Goddar, Heinz J.
(86) International application number: PCT/CN2022/114123
(87) International publication number: WO 2023/142462

(57) **Abstract**

Embodiments of this application provide a network slice adjustment method and apparatus, applied to the network slice field. The method may include: A slice configuration network element receives service experience information from a terminal device, where the service experience information not only includes identifier information of a base station and identifier information of a network slice corresponding to a service, but also may include quality of service indicator information and/or service user experience information. Then, the slice configuration network element may determine, based on the service experience information, that the base station corresponding to an identifier of the base station cannot meet the service, and adjust, based on a determining result that the base station cannot meet the service, a network slice supported by the base station. Further, in embodiments of this application, configuration of the network slice supported by the base station may be automatically optimized based on the determining result that the base station cannot meet the service, so as to avoid a case in which the service of a user is adversely affected because the configuration of the network slice supported by the base station cannot meet the service of the user, and improve user experience.

## Description

This application claims priority to Chinese Patent Application No. 202210114213.1, filed with the China National Intellectual Property Administration on January 30, 2022 and entitled "NETWORK SLICE ADJUSTMENT METHOD AND APPARATUS", which is incorporated herein by reference in its entirety.

### TECHNICAL FIELD

Embodiments of this application relate to the communications field, and in particular, to a network slice adjustment method and apparatus.

### BACKGROUND

A network slice (Network slice, NS) is one of key technologies for a 5th generation (5th generation, 5G) mobile communication system. The network slice is a complete instantiated logical network including a group of network functions (Network functions, NFs), and is intended to use optimal resource allocation to more efficiently address special requirements of some services (for example, a vertical service) (for example, a high-definition video service that has a high requirement on bandwidth and a gaming service that has a high requirement on latency).

However, in some scenarios, for example, a vertical industry, requirements for service continuity differ greatly among users, and tolerance for service interruption or experience deterioration is low. Because it is difficult for a base station to adjust a network slice based on a service, user experience is poor.

### SUMMARY

Embodiments of this application provide a network slice adjustment method and apparatus, so that configuration of a network slice supported by a base station may be automatically optimized based on a determining result that the base station cannot meet a service, so as to avoid a case in which the service of a user is adversely affected because the configuration of the network slice supported by the base station cannot meet the service of the user, and improve user experience.

According to a first aspect, a network slice adjustment method is provided, including: A slice configuration network element receives service experience information from a terminal device, where the service experience information includes identifier information of a base station and identifier information of a network slice corresponding to a service, and the service experience information further includes quality of service indicator information and/or service user experience information. The slice configuration network element determines, based on the service experience information, that the base station corresponding to an identifier of the base station cannot meet the service. The slice configuration network element adjusts, based on a determining result that the base station cannot meet the service, a network slice supported by the base station.

Further, the service experience information may further include identifier (for example, a PLMN ID) information of an operator of the base station, application identifier (for example, APP ID) information, quality of service indicator (for example, Service Continuity KQI) information of the base station, service interruption indication information, or information about a quantity of PDU session establishment failures.

It should be understood that the foregoing solution may be applied not only to a scenario in which the terminal device registers the network slice corresponding to the service with the base station for the first time, but also to a scenario in which the terminal device is handed over between base stations.

Based on the foregoing solution, after receiving the service experience information, the slice configuration network element may determine, based on the service experience information, that the base station cannot meet the service, and adjust, based on the determining result that the base station cannot meet the service, the network slice supported by the base station, so that configuration of the network slice supported by the base station is automatically optimized, to avoid a case in which the service of a user is adversely affected because the configuration of the network slice supported by the base station cannot meet the service of the user, and improve user experience.

With reference to the first aspect, in some implementations of the first aspect, that the slice configuration network element determines, based on the service experience information, that the base station corresponding to an identifier of the base station cannot meet the service includes: The slice configuration network element receives network performance indicator information from a network slice management function network element, where the network performance indicator information includes a success rate of establishing a protocol data unit (protocol data unit, PDU) session by the network slice supported by the base station and/or resource utilization of the network slice supported by the base station. The slice configuration network element determines, based on the service experience information and the network performance indicator information, that the base station cannot meet the service.

The PDU session is used as a type of session. Herein, only the PDU session is used as an example. The PDU session in the foregoing solution may alternatively be another type of data connection session. This is not limited in this application.

Based on the foregoing solution, the slice configuration network element may determine, based on both the service experience information and the network performance indicator information, a base station that needs to be optimized, that is, determine that the base station cannot meet a service. In this way, the slice configuration network element may consider more parameter information, so as to improve accuracy of the slice configuration network element in determining that the base station cannot meet the service.

With reference to the first aspect, in some implementations of the first aspect, that the base station cannot meet the service includes that the base station does not support the network slice corresponding to the service, or that network slice resources supported by the base station are insufficient.

With reference to the first aspect, in some implementations of the first aspect, when the base station does not support the network slice corresponding to the service, that the slice configuration network element adjusts the network slice supported by the base station includes: The slice configuration network element generates, for the base station, information used to support the network slice corresponding to the service. The slice configuration network element sends the information used to support the network slice corresponding to the service.

Specifically, the slice configuration network element may generate, for the base station based on the service experience information or based on the service experience information and the network performance indicator information, or further by placing a high priority on experience of a high priority terminal device or experience of a high priority service of the terminal device, the information used to support the network slice corresponding to the service.

Based on the foregoing solution, after receiving the service experience information or after receiving the service experience information and the network performance indicator information, the slice configuration network element may determine, based on the service experience information or based on the service experience information and the network performance indicator information, that a result that the base station cannot meet the service is that the base station does not support the network slice corresponding to the service, generate, for the base station based on the result that the base station does not support the network slice corresponding to the service, the information used to support the network slice corresponding to the service, and send the information to the network slice management function network element. In this way, not only the configuration of the network slice supported by the base station may be automatically optimized, but also the base station may be adjusted accordingly, so as to avoid a case in which the service of the user is adversely affected because the configuration of the network slice supported by the base station cannot meet the service of the user, and improve user experience.

With reference to the first aspect, in some implementations of the first aspect, the information used to support the network slice corresponding to the service includes identifier information used to support the network slice corresponding to the service and/or resource configuration information used to support the network slice corresponding to the service, where the identifier information used to support the network slice corresponding to the service includes an identifier of the network slice supported by the base station and an identifier of an operator of the base station, and the resource configuration information used to support the network slice corresponding to the service includes resource configuration of the network slice supported by the base station and/or a dedicated resource of the network slice supported by the base station.

The information used to support the network slice corresponding to the service may further include the identifier information of the base station and list information of a quantity of high priority terminal devices.

With reference to the first aspect, in some implementations of the first aspect, the slice configuration network element receives response information of the information used to support the network slice corresponding to the service, where the response information of the information used to support the service indicates that the base station has completed adjustment.

With reference to the first aspect, in some implementations of the first aspect, when the network slice resources supported by the base station are insufficient, that the slice configuration network element adjusts, based on a case that the base station cannot meet the service, the network slice supported by the base station includes: The slice configuration network element generates, for the base station, information used to allocate the network slice supported by the base station. The slice configuration network element sends the information used to allocate the network slice supported by the base station.

Based on the foregoing solution, after receiving the service experience information and the network performance indicator information, the slice configuration network element may determine, based on the service experience information and the network performance indicator information, that a category for that the base station cannot meet the service is that the network slice resources supported by the base station are insufficient, generate, for the base station based on a case that the network slice resources supported by the base station are insufficient, the information used to allocate the network slice supported by the base station, and send the information to the network slice management function network element. In this way, not only the configuration of the network slice supported by the base station may be automatically optimized, but also the base station may be adjusted accordingly, so as to avoid a case in which the service of the user is adversely affected because the configuration of the network slice supported by the base station cannot meet the service of the user, and improve user experience.

With reference to the first aspect, in some implementations of the first aspect, the information used to allocate the network slice supported by the base station includes identifier information used to allocate the network slice supported by the base station and/or resource configuration information used to allocate the network slice supported by the base station, where the identifier information used to allocate the network slice supported by the base station includes an identifier of the network slice supported by the base station and an identifier of an operator of the base station, and the resource configuration information used to allocate the network slice supported by the base station includes resource configuration of the network slice supported by the base station and/or a dedicated resource of the network slice supported by the base station.

The information used to allocate the network slice supported by the base station may further include the identifier information of the base station and list information of a quantity of high priority terminal devices.

With reference to the first aspect, in some implementations of the first aspect, the slice configuration network element receives response information of the information used to allocate the network slice supported by the base station, where the response information of the information used to allocate the network slice supported by the base station indicates that the base station has completed adjustment.

With reference to the first aspect, in some implementations of the first aspect, after the slice configuration network element receives the response information of the information used to support the network slice corresponding to the service or the response information of the information used to allocate the network slice supported by the base station, the slice configuration network element updates a topological relationship of the service, where the topological relationship of the service includes an association relationship among the identifier of the network slice corresponding to the service, an application identifier, the identifier of the base station, and an identifier of a core network element.

Specifically, after receiving the foregoing response information of the information used by the base station to support the network slice corresponding to the service or the response information of the information used to allocate the network slice supported by the base station, the slice configuration network element may update topological information of the service based on a configuration result of the network slice supported by the base station. For example, the association relationship among the network slice identifier, the application identifier, the identifier of the base station, and the identifier of the core network element (CN function ID) may be updated.

Based on the foregoing solution, the slice configuration network element may update the topological relationship of the service of the user based on the received response information.

With reference to the first aspect, in some implementations of the first aspect, the slice configuration network element sends, to the terminal device, indication information for periodically sending the service experience information to the slice configuration network element.

With reference to the first aspect, in some implementations of the first aspect, that a slice configuration network element receives service experience information from a terminal device includes: The slice configuration network element periodically receives the service experience information from the terminal device.

Specifically, the slice configuration network element may configure the indication information for the service of the terminal device, and then send the indication information to the terminal device. After receiving the indication information, the terminal device may periodically send the service experience information to the slice configuration network element based on the indication information.

With reference to the first aspect, in some implementations of the first aspect, the indication information includes at least one of the following information of the terminal device: a quality of service indicator, a service interruption indication, or a quantity of PDU session establishment failures.

In an implementation, the indication information may include at least one of the following pieces of periodic information: the quality of service indicator, the service interruption indication, or the quantity of PDU session establishment failures. For example, the indication information may indicate that 15 seconds is a periodic interval, so that the periodic interval for the service experience information including at least one of the quality of service indicator, the service interruption indication, or the quantity of PDU session establishment failures is 15 seconds, and the terminal device may periodically send the service experience information to the slice configuration network element.

With reference to the first aspect, in some implementations of the first aspect, the slice configuration network element sends threshold information to the terminal device, where the threshold information indicates to send the service experience information to the slice configuration network element when the quality of service indicator information and/or the service user experience information are/is lower than or equal to a preset threshold.

Specifically, the slice configuration network element may configure, based on the service of the terminal device, a threshold for reporting the service experience information for the service of the terminal device. Then, the slice configuration network element may send the threshold information to the terminal device. Finally, the terminal device may send the service experience information to the slice configuration network element based on the threshold information when the service user experience information and/or the quality of service indicator information included in the service experience information is lower than or equal to the preset threshold.

According to a second aspect, a network slice adjustment method is provided, including: A terminal device generates service experience information, where the service experience information includes identifier information of a base station and identifier information of a network slice corresponding to a service, and the service experience information further includes quality of service indicator information and/or service user experience information. The terminal device sends the service experience information to a slice configuration network element.

Based on the foregoing solution, the terminal device may generate the service experience information and send the service experience information to the slice configuration network element. After that, the slice configuration network element may determine, based on the service experience information, that the base station cannot meet the service, and adjust, based on a case that the base station cannot meet the service, the network slice supported by the base station, so that configuration of the network slice supported by the base station is automatically optimized, to avoid a case in which the service of a user is adversely affected because the configuration of the network slice supported by the base station cannot meet the service of the user, and improve user experience.

With reference to the second aspect, in some implementations of the second aspect, the terminal device receives, from the slice configuration network element, indication information for periodically sending the service experience information to the slice configuration network element.

With reference to the second aspect, in some implementations of the second aspect, that the terminal device sends the service experience information to a slice configuration network element includes: The terminal device periodically sends the service experience information to the slice configuration network element.

With reference to the second aspect, in some implementations of the second aspect, the indication information includes at least one of the following information of the terminal device: a quality of service indicator, a service interruption indication, or a quantity of PDU session establishment failures.

With reference to the second aspect, in some implementations of the second aspect, the terminal device receives threshold information from the slice configuration network element, where the threshold information indicates to send the service experience information to the slice configuration network element when the quality of service indicator information and/or the service user experience information are/is lower than or equal to a preset threshold.

According to a third aspect, a network slice adjustment apparatus is provided. The apparatus is configured to perform the method according to the foregoing first aspect or second aspect. Specifically, the apparatus may include a unit and/or a module configured to perform the method according to the first aspect or the second aspect, for example, a processing unit and/or a communication unit.

In an implementation, the apparatus is a slice configuration network element. When the apparatus is the slice configuration network element, the communication unit may be a transceiver or an input/output interface, and the processing unit may be a processor.

In another implementation, the apparatus is a chip, a chip system, or a circuit used in the slice configuration network element. When the apparatus is the chip, the chip system, or the circuit used in a communication device, the communication unit may be the input/output interface, an interface circuit, an output circuit, an input circuit, a pin, a related circuit, or the like on the chip, the chip system, or the circuit; and the processing unit may be the processor, a processing circuit, a logic circuit, or the like.

For example, the apparatus is the chip, the chip system, or the circuit in the slice configuration network element. In this case, the apparatus may include the unit and/or the module configured to perform the method according to the first aspect, for example, the processing unit and/or the communication unit.

In an implementation, the apparatus is a terminal device. When the apparatus is the terminal device, the communication unit may be the transceiver or the input/output interface, and the processing unit may be the processor.

In another implementation, the apparatus is a chip, a chip system, or a circuit used in the terminal device. When the apparatus is the chip, the chip system, or the circuit used in a communication device, the communication unit may be the input/output interface, an interface circuit, an output circuit, an input circuit, a pin, a related circuit, or the like on the chip, the chip system, or the circuit; and the processing unit may be the processor, a processing circuit, a logic circuit, or the like.

For example, the apparatus is the chip, the chip system, or the circuit in the terminal device. In this case, the apparatus may include the unit and/or the module configured to perform the method according to the first aspect, for example, the processing unit and/or the communication unit.

Optionally, the transceiver may be a transceiver circuit. Optionally, the input/output interface may be an input/output circuit.

According to a fourth aspect, a network slice adjustment apparatus is provided. The apparatus includes: a memory, configured to store a program; and a processor, configured to execute the program stored in the memory. When the program stored in the memory is executed, the processor is configured to perform the method according to the foregoing first aspect or second aspect.

According to a fifth aspect, this application provides a processor, configured to perform the method according to each of the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver performs transmission. After the information is output by the processor, other processing may further need to be performed on the information before the information arrives at the transceiver. Similarly, when the processor receives the foregoing inputted information, the transceiver obtains/receives the foregoing information, and inputs the foregoing information into the processor. Further, after the transceiver receives the foregoing information, other processing may need to be performed on the foregoing information before the information is input into the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in a memory to perform these methods. The memory may be a non-transitory (non-transitory) memory such as a read-only memory (read-only memory, ROM). The memory and the processor may be integrated on a same chip, or may be separately disposed on different chips. A type of the memory and a manner of disposing the memory and the processor are not limited in embodiments of this application.

According to a sixth aspect, a computer-readable storage medium is provided. The computer-readable storage medium stores program code to be executed by a device, and the program code is used to perform the method according to the foregoing first aspect or second aspect.

According to a seventh aspect, a computer program product including instructions is provided. When the computer program product runs on a computer, the computer is enabled to perform the method according to the foregoing first aspect or second aspect.

According to an eighth aspect, a chip is provided. The chip includes a processor and a communication interface. The processor reads, through the communication interface, instructions stored in a memory, to perform the method according to the foregoing first aspect or second aspect.

Optionally, in an implementation, the chip may further include the memory. The memory stores instructions, and the processor is configured to execute the instructions stored in the memory. When the instructions are executed, the processor is configured to perform the method according to the foregoing first aspect or second aspect.

According to a ninth aspect, a network slice adjustment system is provided, including the slice configuration network element in the first aspect and the terminal device in the second aspect.

### BRIEF DESCRIPTION OF DRAWINGS

FIG. 1 is a schematic diagram of a network architecture 100;
FIG. 2 is a schematic diagram of a network architecture 200;
FIG. 3 is a schematic diagram of a network architecture 300;
FIG. 4 is an example flowchart of a network slice adjustment method 400;
FIG. 5 is an example flowchart of a network slice adjustment method 500;
FIG. 6 is a schematic block diagram of a network slice handover apparatus 600 according to an embodiment of this application; and
FIG. 7 is a schematic block diagram of a network slice handover apparatus 700 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, loT) communication system, or other communication systems.

First, a network architecture applicable to this application is briefly described below.

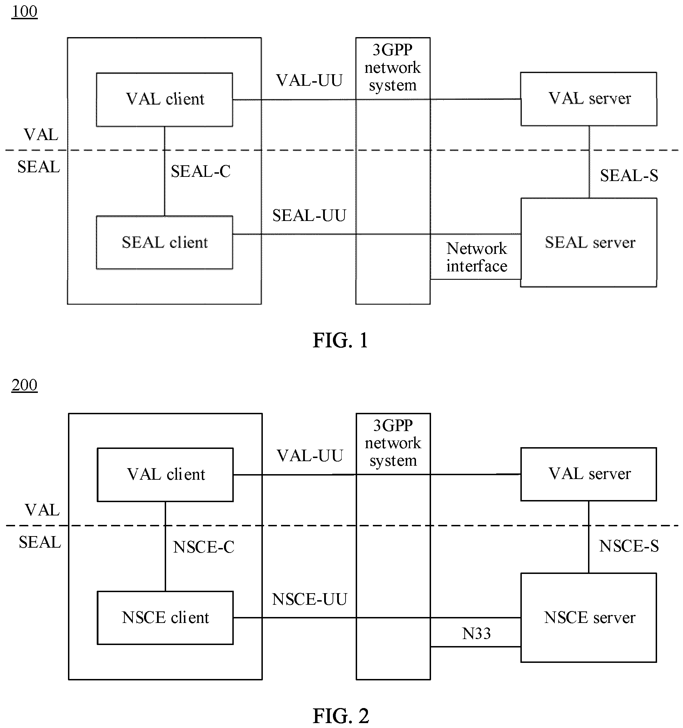

For example, FIG. 1 is a schematic diagram of a network architecture 100.

FIG. 1 is a schematic diagram of a network architecture of a service enabler architecture layer for verticals (service enabler architecture layer for verticals, SEAL) applicable to an embodiment of this application. In a vertical application layer (vertical application layer, VAL), a VAL client (VAL client) communicates with a VAL server (VAL server) through a VAL-UU interface. The VAL-UU interface supports two information transmission modes: unicast and multicast. The service enabler architecture layer for verticals (service enabler architecture layer for verticals, SEAL) in a UE and a server is called a SEAL client (SEAL client) and a SEAL server (SEAL server) respectively. The SEAL may provide service enabler layer support functions (service enabler layer support functions) for the VAL client through a SEAL-C interface. The VAL server may communicate with the SEAL server by using a SEAL-S interface. The SEAL server may communicate with a 3GPP network through a network interface provided by 3GPP, including an N33 interface provided by a network exposure function (network exposure function, NEF) network element, a service-based interface provided by an OAM, and the like.

The vertical application layer supports the following SEAL services:
1. Location management (Location management function)
2. Group management (group management function)
3. Configuration management (configuration management function)
4. Key management (key management function)
5. Network resource management (network resource management function)
6. Network slice capability management (network slice capability management function)

The VAL server may invoke one or more of the foregoing SEAL capabilities to use a 3GPP network capability.

FIG. 2 is a schematic diagram of a network architecture 200.

FIG. 2 is a schematic diagram of a network architecture of network slice capability enablement (network slice capability enablement, NSCE) applicable to an embodiment of this application. The network architecture 200 is configured to support network slice capability management for a vertical application. A network slice capability enablement server (network slice capability enablement server, NSCE server) function entity provides a function in terms of a network slice to support a VAL application. This enablement supports mapping or migration of one or more vertical applications to one or more network slices. A network slice capability enablement client (network slice capability enablement client, NSCE client) function entity is used as a slice enablement application client. The NSCE client may interact with the NSCE server, to trigger network slice adaptation (adaptation) caused by an application requirement change. The application requirement change herein may be an application QoS requirement change, a service operation change, or the like. The NSCE client may receive a network slice/DNN remapping notification from the NSCE server. The NSCE client communicates with the NSCE server through an NSCE-UU interface. The network slice capability management client provides support for a network slice capability management function for the VAL client through an NSCE-C interface. The VAL server communicates with the NSCE server through an NSCE-S interface. It is assumed that the NSCE server is deployed in a 5G system domain, as an AF, the NSCE server may communicate with a 5G core network function by using an NEF (N33) reference point (used to interact with a PCF).

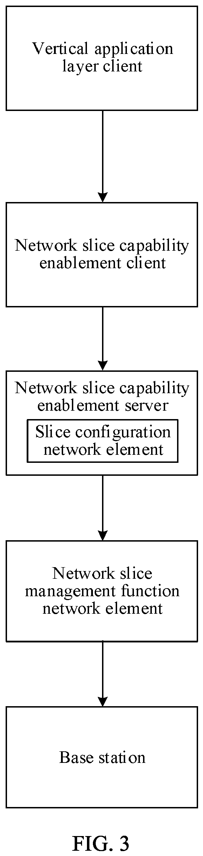

FIG. 3 is a schematic diagram of a network architecture 300.

As shown in FIG. 3, the network architecture may include but is not limited to a vertical application layer client (Vertical application layer client, VAL client), a network slice capability enablement client (Network slice capability enablement client, NSCE client), a network slice capability enablement server (Network slice capability enablement server, NSCE server), a network slice management function (Network slice management function, NSMF) network element, a slice configuration network element, and a base station.

The following briefly describes the network elements shown in FIG. 3.

The vertical application layer client reports service experience information of a user and user information. For example, a user experience report may include service user experience information, quality of service indicator information, service interruption indication information, or information about a quantity of service interruptions. The user information may include identifier information of a terminal device, identifier information of an operator, identifier information of an application, user identifier information of a vertical industry, and identifier information of a network slice used by a current service.

The network slice capability enablement client collects user experience reports and user information.

The network slice capability enablement server configures information about a network slice and formulates a policy.

The network slice management function network element configures a network slice for a network element (for example, the base station).

The slice configuration network element may generate configuration information of the network slice supported by the base station by collecting the user experience reports sent by the network slice capability enablement client, and then invoke a network slice configuration interface provided by the network slice management function network element to implement automatic configuration of the network slice based on user service continuity.

The slice configuration network element may also be referred to as a base station slice configuration optimization network element or a base station slice configuration optimization module.

The base station is responsible for user access to a network slice service, and may provide a function of accessing a communication network for a terminal device. Specifically, the base station may be a wireless network device in a 3rd generation partnership project (3rd generation partnership project, 3GPP) network, or may be an access point in a non-3GPP (non-3GPP) network.

The base station may use different wireless access technologies. Currently, there are two types of wireless access technologies: a 3GPP access technology (for example, a wireless access technology used in a 3rd generation (3rd generation, 3G) system, a 4th generation (4th generation, 4G) system, or a 5G system) and a non-3GPP (non-3GPP) access technology. The 3GPP access technology is an access technology that complies with a 3GPP standard specification. For example, an access network device in the 5G system is referred to as a next generation node base station (next generation Node Base station, gNB) or a RAN device. The non-3GPP access technology may include an air interface technology represented by an access point (access point, AP) in wireless fidelity (wireless fidelity, Wi-Fi), a worldwide interoperability for microwave access (worldwide interoperability for microwave access, WiMAX), or a code division multiple access (code division multiple access, CDMA).

The base station may also be responsible for functions such as radio resource management, quality of service (quality of service, QoS) management, and data compression and encryption on an air interface side. The base station provides an access service for the terminal device, and further completes forwarding of a control signal and user data between the terminal device and a core network.

The base station may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP). The base station may further include a gNB or a transmission point (TRP or TP) in a 5G (for example, NR) system, or one antenna panel or a group of antenna panels (including a plurality of antenna panels) of a base station in the 5G system. Alternatively, the base station may include a network node constituting a gNB or a transmission point, for example, a distributed unit (distributed unit, DU), or a base station in a next-generation 6G communication system. A specific technology and a specific device form used by the base station are not limited in embodiments of this application.

It should be noted that, according to the schematic diagrams of the network architectures shown in FIG. 1 to FIG. 3, the following points should be further understood:
1. The network architectures shown in FIG. 1 to FIG. 3 are merely examples for description, and network architectures applicable to embodiments of this application are not limited thereto. Any network architecture that can implement functions of the foregoing network elements is applicable to embodiments of this application.
2. Functions or network elements in the network architectures shown in FIG. 1 to FIG. 3 may be understood as network elements configured to implement different functions, for example, may be combined into a network slice as required. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.
3. Names of the network elements or the functions in the network architectures shown in FIG. 1 to FIG. 3 are defined only for ease of distinguishing between different functions, and should not constitute any limitation on this application. This application does not exclude a possibility of using other names in a 6G network and other networks in the future. For example, in a 6G network, some or all of the foregoing network elements may still use terms in 5G, or may use other names.

For ease of understanding embodiments of this application, a network slice in this application is explained.

Currently, there are a large quantity of devices in a mobile communication system, and a quantity of cells also greatly increases. In addition, there is a scenario in which different network slices are supported in different frequency bands. A network slice (Network slice) is a logical network with a specific network characteristic, and the network slice may enable a 5G mobile communication system to meet a differentiated network requirement. A 5G physical network may be abstracted into a plurality of network slices. Each network slice forms an end-to-end logical network. The network slices are logically isolated from and independent of each other. Generally, network characteristics of different network slices are different. For example, an enhanced mobile broadband (Enhanced mobile broadband, eMBB) network slice needs to support large-bandwidth and low-latency services; a massive machine-type communications (Massive machine type connection, mMTC) network slice supports massive access and low bandwidth; and an ultra-reliable low-latency communication (Ultra reliability and low latency connection, uRLLC) network slice features high reliability and low latency. A service of each network slice is identified by using single-network slice selection assistance information (Single-network slice selection assistance information, S-NSSAI). The 5G network selects a network slice for the service based on the S-NSSAI carried in a registration request and a session establishment request of the terminal device, and transmits service data of a customer in the selected network slice. The customer may subscribe to a plurality of network slices from an operator, and the terminal device may request to access a plurality of network slices at the same time. For example, an internet of vehicles terminal may simultaneously access three network slices: mMTC, eMBB, and uRLLC. The mMTC slice is used for daily vehicle fault detection, maintenance reminder, and the like. The eMBB slice is used for instant message communication and online on-demand entertainment of passengers. The uRLLC slice is used for an internet of vehicles application such as non-line-of-sight communication in autonomous driving.

With rapid development of wireless communication technologies, a current communication network faces diversified application scenarios. A network slice may provide a customized virtual network for different application requirements, to meet differentiated performance indicators in different scenarios. The network slice not only can provide a network service with quality assurance for a user, but also can improve resource utilization and reduce costs by sharing resources.

However, in the 5G mobile communication network, a network slice type supported by the base station affects whether the base station can bear a service that is initiated by the terminal device and that is identified by the S-NSSAI of the network slice. In an existing communication network, because some base stations are newly constructed or relocated, some of the base stations do not support services of some network slices or do not allocate sufficient resources (for example, physical resource block resources and protocol data unit sessions) to some network slices. Consequently, these base stations cannot bear some specific network slice services initiated by the terminal device. Alternatively, when the terminal device moves from a tracking area (Tracking area, TA) to another TA, due to a configuration problem, the base station in the new TA cannot support the network slice service that is being used by the terminal device, and a terminal device handover failure is triggered. As a result, a problem such as a call drop or service interruption occurs on the terminal device.

For example, in an implementation, in a case in which the terminal device has initiated a service of a network slice #1, and the network slice #1 in a target cell is overloaded, when the terminal device moves from a source cell to the target cell, the service of the terminal device may be interrupted or service experience of the terminal device may deteriorate.

In another implementation, in a case in which the terminal device has initiated a service of a network slice #2, and a target cell does not support the network slice #2, when the terminal device moves from the source cell to the target cell, the service indicated by the network slice #2 may be rejected. Consequently, the service of the terminal device is interrupted.

In still another implementation, in a non-mobility scenario, when a cell has an overloaded network slice or has insufficient resources, the service experience of the terminal device may also deteriorate.

In view of this, this application provides a network slice adjustment method and apparatus, to resolve the foregoing problem.

The foregoing briefly describes terms used in this application, and details are not described in the following embodiments. The following describes in detail a multicast/broadcast communication method provided in embodiments of this application with reference to accompanying drawings. Embodiments of this application may be applied to the network architecture shown in FIG. 2. This is not limited.

To better understand the embodiments, the following descriptions are provided herein:
1. The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with the evolution of the network architecture and the emergence of new service scenarios, the technical solutions provided in embodiments of this application are also applicable to similar technical problems.
2. The aspects or features of embodiments of this application may be implemented by using a method or an apparatus, or may be implemented through a product using standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk or a magnetic tape), an optical disc (for example, a compact disc (compact disc, CD)), a digital versatile disc (digital versatile disc, DVD), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry an instruction and/or data.
3. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that the following embodiments of this application may be applied not only to a scenario in which the terminal device registers the network slice corresponding to the service with the base station for the first time, but also to a scenario in which the terminal device is handed over between base stations.

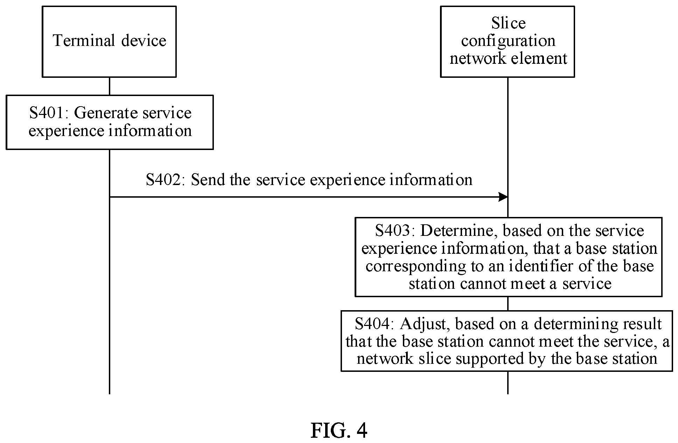

FIG. 4 is an example flowchart of a network slice adjustment method 400. The method 400 may be used to adjust a network slice for a base station in a vertical industry. The method 400 may include the following steps.

S401: A terminal device generates service experience information.

The service experience information may include identifier (for example, gNB ID) information of the base station and identifier information (for example, S-NSSAI) of the network slice corresponding to a service, and may further include quality of service indicator (for example, Service Continuity KQI) information and/or service user experience (Service Continuity QoE) information.

Optionally, the service experience information may further include identifier (for example, PLMN ID) information of an operator of the base station, application identifier (for example, APP ID) information, service interruption indication information, or information about a quantity of PDU session establishment failures.

S402: The terminal device sends the service experience information to a slice configuration network element. Correspondingly, the slice configuration network element receives the service experience information from the terminal device.

In a possible implementation, to enable the terminal device to periodically send the service experience information to the slice configuration network element, the method 400 further includes: The slice configuration network element sends, to the terminal device, indication information for periodically sending the service experience information to the slice configuration network element. Correspondingly, the terminal device receives, from the slice configuration network element, the indication information for periodically sending the service experience information to the slice configuration network element.

The indication information may include at least one of the following information: the quality of service indicator (for example, Service Continuity KQI) information, the service interruption indication (for example, Service Interruption) information, or the information about a quantity of PDU session establishment failures (for example, PDU Session FAIL to Setup Num).

Specifically, the slice configuration network element may configure the indication information for the service of the terminal device, and then send the indication information to the terminal device. After receiving the indication information, the terminal device may periodically send the service experience information to the slice configuration network element based on the indication information.

In an implementation, the indication information may include at least one of the following pieces of periodic information: a quality of service indicator, a service interruption indication, or the quantity of PDU session establishment failures. For example, the indication information may indicate that 15 seconds is a periodic interval, so that the periodic interval for the service experience information including at least one of the quality of service indicator, the service interruption indication, or the quantity of PDU session establishment failures is 15 seconds, and the terminal device may periodically send the service experience information to the slice configuration network element.

It should be understood that a PDU session is used as a type of session. Herein, only the PDU session is used as an example. The PDU session in embodiments of this application may alternatively be another type of data connection session. This is not limited in this application.

In another possible implementation, the method 400 further includes: The slice configuration network element sends threshold information to the terminal device. Correspondingly, the terminal device receives the threshold information from the slice configuration network element.

The threshold information indicate to send the service experience information to the slice configuration network element when the quality of service indicator information and/or the service user experience information are/is lower than or equal to a preset threshold.

For example, the threshold may include a preset threshold of at least one of the service experience (for example, Service Continuity QoE) information or the quality of service indicator (for example, Service Continuity KQI) information.

Specifically, the slice configuration network element may determine, based on the service of the terminal device, a threshold for reporting the service experience information for the service of the terminal device. Then, the slice configuration network element may send the threshold information to the terminal device. Finally, the terminal device may send the service experience information to the slice configuration network element based on the threshold information when the quality of service indicator information and/or the service user experience information is lower than or equal to the preset threshold.

S403: The slice configuration network element determines, based on the service experience information, that the base station corresponding to an identifier of the base station cannot meet the service.

That the base station cannot meet the service includes that the base station does not support the network slice corresponding to the service, or that network slice resources supported by the base station are insufficient.

In a possible implementation, the slice configuration network element may determine, based on the service experience information, that the base station cannot meet the service.

For example, the slice configuration network element may determine, based on a case that a success rate of establishing a PDU session of the terminal device is 0 as indicated in service experience information feedback and/or a case that user experience is poor as indicated in feedback, that the base station does not support the network slice corresponding to the service.

In an implementation, poor user experience indicated in the feedback may be obtained if a mean opinion score (mean opinion score, MOS) given by a user is lower than a preset threshold, and the mean opinion score may be determined based on parameters such as delay jitter of a service, a data throughput, and a score given by the user.

For example, the slice configuration network element may determine, based on a case that, as indicated in the service experience information feedback, the success rate of establishing the PDU session of the terminal device is lower than a preset threshold or a quantity of PDU session interruptions of the terminal device is greater than a preset threshold, and/or a case that the mean opinion score given by the user is lower than a preset threshold (for example, the mean opinion score given by the user is lower than the preset threshold because the delay jitter of the service is greater than a preset threshold, the data throughput is lower than a preset threshold, the score given by the user is lower than a preset threshold, or the like), that the network slice resources supported by the base station are insufficient.

In another possible implementation, the method 400 further includes: The slice configuration network element receives network performance indicator information from a network slice management function network element. Correspondingly, the network slice management function network element sends the network performance indicator information to the slice configuration network element.

The network performance indicator information may include a success rate of establishing a PDU session by a network slice supported by the base station and/or resource utilization of the network slice supported by the base station.

The slice configuration network element may determine, based on the service experience information and the network performance indicator information, that the base station cannot meet the service.

For example, the slice configuration network element may determine, based on at least one of the following parameters: the success rate of establishing the PDU session of the terminal device is 0 as indicated in the service experience information or user experience is poor as indicated in the feedback, and the network slice resources supported by the base station are sufficient or resource utilization of physical network slice resources supported by the base station is normal as indicated in the network performance indicator information, that the base station does not support the network slice corresponding to the service.

For example, the slice configuration network element may determine, based on at least one of the following parameters: the success rate of establishing the PDU session of the terminal device is low or the quantity of PDU session interruptions of the terminal device is large as indicated in the service experience information, or user experience is poor as indicated in the feedback, and the network slice resources supported by the base station are insufficient or the resource utilization of the physical network slice resources supported by the base station is excessively high as indicated in the network performance indicator information, that the network slice resources supported by the base station are insufficient.

For the description of poor user experience indicated in the feedback, refer to the foregoing related description in this step.

S404: The slice configuration network element adjusts, based on a determining result that the base station cannot meet the service, the network slice supported by the base station.

For example, the slice configuration network element may specifically adjust, based on the determining result that the base station cannot meet the service, the network slice supported by the base station.

In one aspect, when the base station does not support the network slice corresponding to the service, the slice configuration network element may generate, for the base station based on the service experience information or based on the service experience information and the network performance indicator information, or further by placing a high priority on experience of a high priority terminal device or experience of a high priority service of the terminal device, information used to support the network slice corresponding to the service.

The information used to support the network slice corresponding to the service may include identifier information used to support the network slice corresponding to the service and/or resource configuration information used to support the network slice corresponding to the service. The identifier information used to support the network slice corresponding to the service includes an identifier (for example, the S-NSSAI) of the network slice supported by the base station and an identifier (for example, the PLMN ID) of the operator of the base station. The resource configuration information used to support the network slice corresponding to the service includes resource configuration of the network slice supported by the base station and/or a dedicated resource of the network slice supported by the base station. The resource configuration information of the network slice supported by the base station may include resource configuration object (for example, RRMPolicyMemberList) information and resource type (for example, ResourceType) information.

The information used to support the network slice corresponding to the service may further include the identifier (for example, the gNB ID) information of the base station and list information of a quantity of high priority terminal devices (for example, a HighPriority UE Num).

The slice configuration network element may send, to the network slice management function network element by using an existing interface, the information used to support the network slice corresponding to the service, so that the network slice management function network element may correspondingly determine a configuration parameter of the network slice supported by the base station, and configure the network slice for the base station.

Optionally, after the slice configuration network element sends, to the network slice management function network element, the information used to support the network slice corresponding to the service, the method 400 further includes: The slice configuration network element receives, from the network slice management function network element, response information of the information used to support the network slice corresponding to the service.

The response information of the information used to support the network slice corresponding to the service indicates that the base station has completed parameter adjustment for the corresponding network slice, and has successfully configured the network slice supported by the base station.

In another aspect, the slice configuration network element may determine, based on the service experience information or based on the service experience information and the network performance indicator information, a base station that needs to be optimized. When the service of the terminal device cannot be met because the network slice resources supported by the base station that needs to be optimized are insufficient, the slice configuration network element preferentially guarantees a high priority terminal device, or a high priority service of the terminal device, and generates, for the base station, information used to allocate the network slice supported by the base station.

The information used to allocate the network slice supported by the base station may include identifier information used to allocate the network slice supported by the base station and/or resource configuration information used to allocate the network slice supported by the base station. The identifier information used to allocate the network slice supported by the base station includes the identifier (for example, the S-NSSAI) of the network slice supported by the base station and the identifier (for example, the PLMN ID) of the operator of the base station. The resource configuration information used to allocate the network slice supported by the base station includes resource configuration of the network slice supported by the base station and/or a dedicated resource of the network slice supported by the base station. The resource configuration information of the network slice supported by the base station may include resource configuration object (for example, RRMPolicyMemberList) information and resource type (for example, ResourceType) information.

The information used to allocate the network slice supported by the base station may further include the identifier (for example, the gNB ID) information of the base station and list information of a quantity of high priority terminal devices (for example, a HighPriority UE Num).

The slice configuration network element may send, to the network slice management function network element by using an existing interface, the information used to allocate the network slice supported by the base station, so that the network slice management function network element may correspondingly determine a configuration parameter of the network slice supported by the base station, and configure the network slice for the base station.

Optionally, after the slice configuration network element sends, to the network slice management function network element, the information used to allocate the network slice supported by the base station, the method 400 further includes: The slice configuration network element receives, from the network slice management function network element, response information of the information used to allocate the network slice supported by the base station.

The response information of the information used to allocate the network slice supported by the base station indicates that the base station has completed parameter adjustment for the corresponding network slice, and has successfully configured the network slice supported by the base station.

Optionally, after the slice configuration network element receives, from the network slice management function network element, the response information of the information used by the base station to support the network slice corresponding to the service, or after the slice configuration network element receives, from the network slice management function network element, the response information of the information used to allocate the network slice supported by the base station, the method 400 further includes: The slice configuration network element updates a topological relationship of the service.

Specifically, after receiving the response information of the information used to support the network slice corresponding to the service or the response information of the information used to allocate the network slice supported by the base station, the slice configuration network element may update topological information of the service based on a configuration result of the network slice supported by the base station. For example, the topological information of the service includes an association relationship among the identifier of the network slice (for example, NSSAI), an application identifier (for example, the APP ID), the identifier (for example, the gNB ID) of the base station, and an identifier of a core network element. The application identifier is an application identifier corresponding to the service.

For example, before the slice configuration network element receives a response message, the topological information of the service is as follows: The application identifier is 1, the identifier of the network slice corresponding to the service is 2, the identifier of the base station that bears the network slice whose identifier is 2 is 3, and the identifier of the core network element that bears the network slice whose identifier is 2 is 4. After receiving the response message, the slice configuration network element updates the topological information of the service. The updated topological information of the service is as follows: The application identifier is 1, the identifier of the network slice corresponding to the service is 5, the identifier of the base station that bears the network slice whose identifier is 5 is 6, and the identifier of the core network element that bears the network slice whose identifier is 5 is 7.

Based on the foregoing solution, after receiving the service experience information, the slice configuration network element may determine, based on the service experience information, that the base station cannot meet the service. Further, after receiving the network performance indicator information from the network slice management function network element, the slice configuration network element may determine, based on both the service experience information and the network performance indicator information, that the base station cannot meet the service. That the base station cannot meet the service may include that the base station does not support the network slice corresponding to the service, or the network slice resources supported by the base station are insufficient. Then, based on a case that the base station does not support the network slice corresponding to the service, the information used to support the network slice corresponding to the service may be generated for the base station, and sent to the network slice management function network element; or based on a case that the network slice resources supported by the base station are insufficient, the information used to allocate the network slice supported by the base station may be generated for the base station, and sent to the network slice management function network element. In this way, regardless of an application scenario in which the terminal device registers the network slice corresponding to the service with the base station for the first time or an application scenario in which the terminal device is handed over between base stations, the solution of this application not only can automatically optimize configuration of the network slice supported by the base station, and improve accuracy of the slice configuration network element in determining that the base station cannot meet the service, but also can correspondingly adjust, based on the determining result that the base station cannot meet the service, the network slice supported by the base station accordingly, so as to avoid a case in which the service of the user is adversely affected because the configuration of the network slice supported by the base station cannot meet the service of the user, and improve user experience.

In addition, after receiving the response information of the information used to support the network slice corresponding to the service or the response information of the information used to allocate the network slice supported by the base station, the slice configuration network element may also update the topological information of the service based on the configuration result of the network slice supported by the base station.

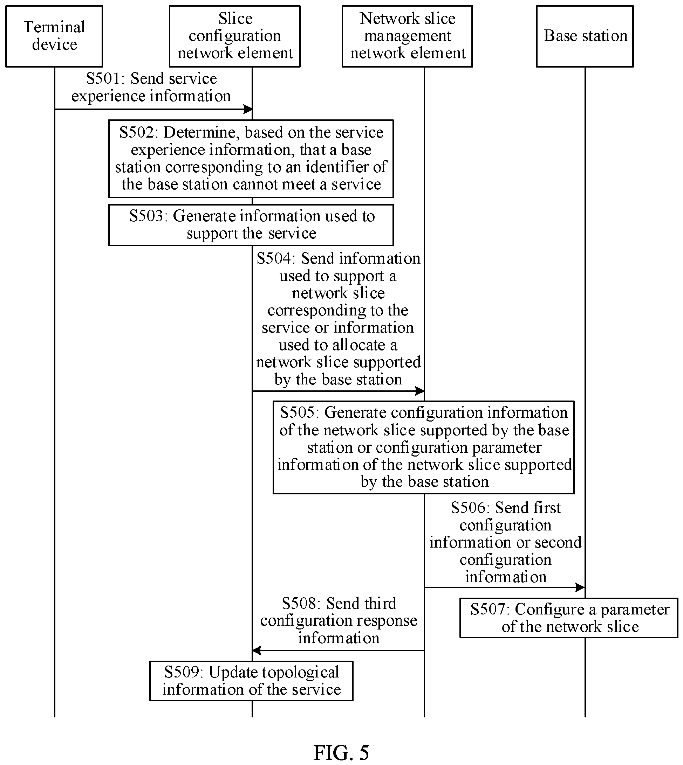

FIG. 5 is an example flowchart of a network slice adjustment method 500. The method 500 may be used to adjust a network slice for a base station in a vertical industry. The method 500 may include the following steps.

S501: A terminal device sends service experience information to a slice configuration network element. Correspondingly, the slice configuration network element receives the service experience information from the terminal device.

The service experience information may include identifier (for example, gNB ID) information of the base station and identifier information (for example, S-NSSAI) of the network slice corresponding to a service, and may further include quality of service indicator (for example, Service Continuity KQI) information and/or service user experience (Service Continuity QoE) information.

Optionally, the service experience information may further include identifier (for example, PLMN ID) information of an operator of the base station, application identifier (for example, APP ID) information, service interruption indication information, or information about a quantity of PDU session establishment failures.

Specifically, for the description of sending the service experience information by the terminal device to the slice configuration network element, refer to S402 for the related description of sending the service experience information by the terminal device to the slice configuration network element. For brevity, details are not described herein in this application.

S502: The slice configuration network element determines, based on the service experience information, that the base station corresponding to an identifier of the base station cannot meet the service.

That the base station cannot meet the service includes that the base station does not support the network slice corresponding to the service, or that network slice resources supported by the base station are insufficient.

For example, the slice configuration network element may determine, based on the service experience information, that the base station cannot meet the service.

Specifically, for the description in which the slice configuration network element determines, based on the service experience information, that the base station corresponding to the identifier of the base station cannot meet the service, refer to S403 for the related description in which the slice configuration network element determines, based on the service experience information, that the base station corresponding to the identifier of the base station cannot meet the service. For brevity, details are not described herein in this application.

Further, the slice configuration network element may determine, based on the service experience information and based on network performance indicator information received from the network slice management network element, that the base station cannot meet the service.

Specifically, for the description in which the slice configuration network element determines, based on the service experience information and the network performance indicator information, that the base station cannot meet the service, refer to S403 for the related description in which the slice configuration network element determines, based on the service experience information and the network performance indicator information, that the base station cannot meet the service. For brevity, details are not described herein in this application.

S503: The slice configuration network element generates information used to meet the service.

In one aspect, when the base station does not support the network slice corresponding to the service, the slice configuration network element may generate, for the base station based on the service experience information or based on the service experience information and the network performance indicator information, or further by placing a high priority on experience of a high priority terminal device or experience of a high priority service of the terminal device, information used to support the network slice corresponding to the service. The information used to support the network slice corresponding to the service is the information used to meet the service.

The information used to support the network slice corresponding to the service may include identifier information used to support the network slice corresponding to the service and/or resource configuration information used to support the network slice corresponding to the service. The identifier information used to support the network slice corresponding to the service includes an identifier (for example, the S-NSSAI) of the network slice supported by the base station and an identifier (for example, the PLMN ID) of the operator of the base station. The resource configuration information used to support the network slice corresponding to the service includes resource configuration of the network slice supported by the base station and/or a dedicated resource of the network slice supported by the base station. The resource configuration information of the network slice supported by the base station may include resource configuration object (for example, RRMPolicyMemberList) information and resource type (for example, ResourceType) information.

The information used to support the network slice corresponding to the service may further include the identifier (for example, the gNB ID) information of the base station and list information of a quantity of high priority terminal devices (for example, a HighPriority UE Num).

In another aspect, the slice configuration network element may determine, based on the service experience information or based on the service experience information and the network performance indicator information, a base station that needs to be optimized. When the service of the terminal device cannot be met because the network slice resources supported by the base station that needs to be optimized are insufficient, the slice configuration network element preferentially guarantees a high priority terminal device, or a high priority service of the terminal device, and generates, for the base station, information used to allocate the network slice supported by the base station. The information used to allocate the network slice supported by the base station is the information used to meet the service.

The information used to allocate the network slice supported by the base station may include identifier information used to allocate the network slice supported by the base station and/or resource configuration information used to allocate the network slice supported by the base station. The identifier information used to allocate the network slice supported by the base station includes the identifier (for example, the S-NSSAI) of the network slice supported by the base station and the identifier (for example, the PLMN ID) of the operator of the base station. The resource configuration information used to allocate the network slice supported by the base station includes resource configuration of the network slice supported by the base station and/or a dedicated resource of the network slice supported by the base station. The resource configuration information of the network slice supported by the base station may include resource configuration object (for example, RRMPolicyMemberList) information and resource type (for example, ResourceType) information.

The information used to allocate the network slice supported by the base station may further include the identifier (for example, the gNB ID) information of the base station and list information of a quantity of high priority terminal devices (for example, a HighPriority UE Num).

S504: The slice configuration network element sends, to the network slice management network element, the information used to support the network slice corresponding to the service or the information used to allocate the network slice supported by the base station. Correspondingly, the network slice management network element receives, from the slice configuration network element, the information used to support the network slice corresponding to the service or the information used to allocate the network slice supported by the base station.

For example, after determining the information used to support the network slice corresponding to the service or the information used to allocate the network slice supported by the base station, the slice configuration network element may send, to the network slice management network element by using an existing interface, the information used to support the network slice corresponding to the service or the information used to allocate the network slice supported by the base station.

S505: The network slice management network element generates configuration information of the network slice supported by the base station or configuration parameter information of the network slice supported by the base station.

In one aspect, after receiving the information used to support the network slice corresponding to the service, the network slice management function network element may determine, based on the information used to support the network slice corresponding to the service and status information of the network slice supported by the base station, a configuration parameter of the network slice supported by the base station, and generate first configuration information of the network slice supported by the base station.

In another aspect, after receiving the information used to allocate the network slice supported by the base station, the network slice management function network element may determine, based on the information used to allocate the network slice supported by the base station and status information of the network slice supported by the base station, a configuration parameter of the network slice supported by the base station, and generate second configuration information of the network slice supported by the base station.

S506: The network slice management network element sends the first configuration information or the second configuration information to the base station. Correspondingly, the base station receives the first configuration information or the second configuration information from the network slice management network element.

For example, after generating the first configuration information or the second configuration information, the network slice management network element may send the first configuration information or the second configuration information to the base station by using the existing interface.

S507: The base station configures a parameter of the network slice.

For example, after receiving the first configuration information or the second configuration information, the base station may configure, based on the first configuration information or the second configuration information, a related parameter of the network slice supported by the base station.

Further, after completing parameter configuration for the supported network slice, the base station may send response information of the first configuration information or response information of the second configuration information to the network slice management network element, to indicate that the base station has completed the parameter configuration for the supported network slice based on the first configuration information or the second configuration information.

S508. The network slice management network element sends third configuration response information to the slice configuration network element. Correspondingly, the slice configuration network element receives the third configuration response information from the network slice management network element.

For example, after receiving the response information of the first configuration information or the response information of the second configuration information from the base station, the network slice management network element may send the third configuration response information to the slice configuration network element, to indicate that the base station has completed the parameter configuration for the network slice based on the first configuration information or the second configuration information.

S509: The slice configuration network element updates topological information of the service.

For example, after receiving the foregoing third configuration response information, the slice configuration network element may update the topological information of the service based on a configuration result of the network slice supported by the base station. For example, the topological information of the service includes an association relationship among the network slice identifier(for example, NSSAI), an application identifier (for example, the APP ID), the identifier (for example, the gNB ID) of the base station, and an identifier of a core network element.

Specifically, for the description of updating the topological information of the service by the slice configuration network element, refer to S404 for the related description of updating the topological information of the service by the slice configuration network element. For brevity, details are not described herein in this application.

Based on the foregoing solution, after receiving the service experience information, the slice configuration network element may determine, based on the service experience information, that the base station cannot meet the service. Further, after receiving the network performance indicator information from the network slice management function network element, the slice configuration network element may determine, based on both the service experience information and the network performance indicator information, that the base station cannot meet the service. That the base station cannot meet the service may include that the base station does not support the network slice corresponding to the service, or the network slice resources supported by the base station are insufficient. Then, based on a case that the base station does not support the network slice corresponding to the service, the information used to support the network slice corresponding to the service may be generated for the base station, and sent to the network slice management function network element; or based on a case that the network slice resources supported by the base station are insufficient, the information used to allocate the network slice supported by the base station may be generated for the base station, and sent to the network slice management function network element. In this way, regardless of an application scenario in which the terminal device registers the network slice corresponding to the service with the base station for the first time or an application scenario in which the terminal device is handed over between base stations, the solution of this application not only can automatically optimize configuration of the network slice supported by the base station, but also can correspondingly adjust, based on a determining result that the base station cannot meet the service, the network slice supported by the base station accordingly, and improve accuracy of the slice configuration network element in determining that the base station cannot meet the service, so as to avoid a case in which the service of a user is adversely affected because the configuration of the network slice supported by the base station cannot meet the service of the user, and improve user experience.

In addition, after receiving the third configuration response information, the slice configuration network element may also update the topological information of the service based on the configuration result of the network slice supported by the base station.

It may be understood that the example in FIG. 4 or FIG. 5 in embodiments of this application is merely intended to help a person skilled in the art understand embodiments of this application, but is not intended to limit embodiments of this application to specific scenarios in the example. A person skilled in the art certainly can make various equivalent modifications or changes based on the example in FIG. 4 or FIG. 5, and such modifications or changes also fall within the scope of embodiments of this application.

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in the embodiments may be mutually referenced or explained in the embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It may be further understood that some message names involved in embodiments of this application do not limit the protection scope of embodiments of this application.

It may be further understood that in the foregoing method embodiments, the method and the operation implemented by the terminal device may also be implemented by a component (for example, a chip or a circuit) of the terminal device. In addition, the method and the operation implemented by a network device may also be implemented by a component (for example, a chip or a circuit) of the network device. This is not limited.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

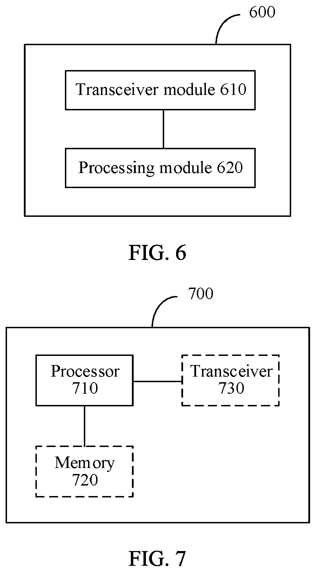

FIG. 6 is a schematic block diagram of a network slice handover apparatus 600 according to an embodiment of this application. The apparatus 600 includes a transceiver module 610 and a processing module 620. The transceiver module 610 may be configured to implement a corresponding communication function. The transceiver module 610 may also be referred to as a communication interface or a communication unit. The processing module 620 may be configured to implement a corresponding processing function.

Optionally, the apparatus 600 may further include a storage module. The storage module may be configured to store instructions and/or data. The processing module 620 may read the instructions and/or the data in the storage module, so that the apparatus implements actions of the device or the network element in each of the foregoing method embodiments.

In a design, the apparatus 600 may be the slice configuration network element in the foregoing embodiment, or may be a component (for example, a chip) of the slice configuration network element. The apparatus 600 may implement steps or processes performed by the slice configuration network element in the foregoing method embodiment. The transceiver module 610 may be configured to perform receiving and sending related operations of the slice configuration network element in the foregoing method embodiment. The processing module 620 may be configured to perform processing related operations of the slice configuration network element in the foregoing method embodiment.

In a possible implementation, the transceiver module 610 is configured to receive service experience information from a terminal device, where the service experience information includes identifier information of a base station and identifier information of a network slice corresponding to a service, and the service experience information further includes quality of service indicator information and/or service user experience information. The processing module 620 is configured to determine, based on the service experience information, that the base station corresponding to an identifier of the base station cannot meet the service. Based on a determining result that the base station cannot meet the service, the slice configuration network element adjusts the network slice supported by the base station.

Optionally, the transceiver module 610 is specifically configured to receive network performance indicator information from a network slice management function network element, where the network performance indicator information includes a success rate of establishing a protocol data unit PDU session by the network slice supported by the base station and/or resource utilization of the network slice supported by the base station.

Optionally, that the base station cannot meet the service includes that the base station does not support the network slice corresponding to the service, or that network slice resources supported by the base station are insufficient.

Optionally, when the base station does not support the network slice corresponding to the service, the processing module 620 is specifically configured to generate, for the base station, information used to support the network slice corresponding to the service; and the transceiver module 610 is specifically configured to send the information used to support the network slice corresponding to the service.

Optionally, the information used to support the network slice corresponding to the service includes identifier information used to support the network slice corresponding to the service and/or resource configuration information used to support the network slice corresponding to the service, where the identifier information used to support the network slice corresponding to the service includes an identifier of the network slice supported by the base station and an identifier of an operator of the base station, and the resource configuration information used to support the network slice corresponding to the service includes resource configuration of the network slice supported by the base station and/or a dedicated resource of the network slice supported by the base station.

Optionally, the transceiver module 610 is further configured to receive response information of the information used to support the network slice corresponding to the service, where the response information of the information used to support the network slice corresponding to the service indicates that the base station has completed adjustment.

Optionally, when the network slice resources supported by the base station are insufficient, the processing module 620 is specifically configured to generate, for the base station, information used to allocate the network slice supported by the base station; and the transceiver module 610 is specifically configured to send the information used to allocate the network slice supported by the base station.

Optionally, the information used to allocate the network slice supported by the base station includes identifier information used to allocate the network slice supported by the base station and/or resource configuration information used to allocate the network slice supported by the base station, where the identifier information used to allocate the network slice supported by the base station includes the identifier of the network slice supported by the base station and the identifier of the operator of the base station, and the resource configuration information used to allocate the network slice supported by the base station includes the resource configuration of the network slice supported by the base station and/or the dedicated resource of the network slice supported by the base station.

Optionally, the transceiver module 610 is further configured to receive response information of the information used to allocate the network slice supported by the base station, where the response information of the information used to allocate the network slice supported by the base station indicates that the base station has completed adjustment.

Optionally, after the slice configuration network element receives the response information of the information used to support the network slice corresponding to the service or the response information of the information used to allocate the network slice supported by the base station, the processing module 620 is further configured to update a topological relationship of the service, where the topological relationship of the service includes an association relationship among the identifier of the network slice corresponding to the service, an application identifier, the identifier of the base station, and an identifier of a core network element.

Optionally, the transceiver module 610 is further configured to send, to the terminal device, indication information for periodically sending the service experience information to the slice configuration network element.

Optionally, the transceiver module 610 is specifically configured to periodically receive the service experience information from the terminal device.

Optionally, the indication information includes at least one of the following information of the terminal device: a quality of service indicator, a service interruption indication, or a quantity of PDU session establishment failures.

Optionally, the transceiver module 610 is further configured to send threshold information to the terminal device, where the threshold information indicates to send the service experience information to the slice configuration network element when the quality of service indicator information and/or the service user experience information are/is lower than or equal to a preset threshold.

In another design, the apparatus 600 may be the terminal device in the foregoing embodiment, or may be a component (for example, a chip) of the terminal device. The apparatus 600 may implement steps or processes performed by the terminal device in the foregoing method embodiment. The transceiver module 610 may be configured to perform receiving and sending related operations of the terminal device in the foregoing method embodiment. The processing module 620 may be configured to perform processing related operations of the terminal device in the foregoing method embodiment.

In a possible implementation, the processing module 620 is configured to generate service experience information, where the service experience information includes identifier information of a base station and identifier information of a network slice corresponding to a service, and the service experience information further includes quality of service indicator information and/or service user experience information. The transceiver module 610 is configured to send the service experience information to a slice configuration network element.

Optionally, the transceiver module 610 is further configured to receive, from the slice configuration network element, indication information for periodically sending the service experience information to the slice configuration network element.

Optionally, the transceiver module 610 is specifically configured to periodically send the service experience information to the slice configuration network element.

Optionally, the indication information includes at least one of the following information of the terminal device: a quality of service indicator, a service interruption indication, or a quantity of PDU session establishment failures.

Optionally, the transceiver module 610 is further configured to receive the threshold information from the slice configuration network element, where the threshold information indicates to send the service experience information to the slice configuration network element when the quality of service indicator information and/or the service user experience information are/is lower than or equal to a preset threshold.

It should be understood that a specific process in which the modules perform the foregoing corresponding steps is described in detail in the foregoing method embodiments. For brevity, details are not described herein again.

It should also be understood that the apparatus 600 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. In an optional example, a person skilled in the art may understand that the apparatus 600 may be specifically the slice configuration network element in the foregoing embodiments, and may be configured to perform processes and/or steps corresponding to the slice configuration network element in the foregoing method embodiments. To avoid repetition, details are not described herein again.

The apparatus 600 in each of the foregoing solutions has a function of implementing corresponding steps performed by the slice configuration network element in the foregoing method. The function may be implemented by hardware, or may be implemented by hardware executing corresponding software. The hardware or software includes one or more modules corresponding to the foregoing function. For example, a transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to respectively perform sending and receiving operations and a related processing operation in the method embodiments.

In addition, the transceiver module 610 may alternatively be a transceiver circuit (for example, the transceiver circuit may include a receiver circuit and a transmitter circuit), and the processing module may be a processing circuit.

It should be noted that the apparatus in FIG. 6 may be the network element or the device in the foregoing embodiments, or may be a chip or a chip system, for example, a system-on-a-chip (system-on-a-chip, SoC). The transceiver module may be an input/output circuit or a communication interface. The processing module is a processor, a microprocessor, or an integrated circuit integrated on the chip. This is not limited herein.

FIG. 7 shows another network slice handover apparatus 700 according to an embodiment of this application. The apparatus 700 includes a processor 710. The processor 710 is configured to execute a computer program or instructions stored in a memory 720, or read data/signaling stored in the memory 720, to perform the methods in the foregoing method embodiments. Optionally, there are one or more processors 710.

Optionally, as shown in FIG. 7, the apparatus 700 further includes the memory 720, and the memory 720 is configured to store the computer program or the instructions and/or the data. The memory 720 may be integrated with the processor 710, or may be disposed separately. Optionally, there are one or more memories 720.

Optionally, as shown in FIG. 7, the apparatus 700 further includes a transceiver 730, and the transceiver 730 is configured to receive and/or send a signal. For example, the processor 710 is configured to control the transceiver 730 to receive and/or send the signal.

In a solution, the apparatus 700 is configured to implement operations performed by the slice configuration network element in the foregoing method embodiments.

For example, the processor 710 is configured to execute the computer program or the instructions stored in the memory 720, to implement related operations of the slice configuration network element in the foregoing method embodiments, for example, the method performed by the slice configuration network element in any embodiment shown in FIG. 4 or FIG. 5.

In another solution, the apparatus 700 is configured to implement operations performed by the terminal device in the foregoing method embodiments.

For example, the processor 710 is configured to execute the computer program or the instructions stored in the memory 720, to implement related operations of the terminal device in the foregoing method embodiments, for example, the method performed by the terminal device in any embodiment shown in FIG. 4 or FIG. 5.

It should be understood that, the processor in this embodiment of this application may be a central processing unit (central processing unit, CPU), or may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described in this specification aims to include but is not limited to these memories and any memory of another proper type.

An embodiment of this application further provides a computer-readable storage medium. The computer-readable storage medium stores computer instructions used to implement the method performed by the slice configuration network element or the method performed by the terminal device in the foregoing method embodiments.

For example, when a computer program is executed by a computer, the computer is enabled to implement the method performed by the slice configuration network element or the method performed by the terminal device in the foregoing method embodiments.

An embodiment of this application further provides a computer program product, including instructions. When the instructions are executed by a computer, the method performed by the slice configuration network element or the method performed by the terminal device in the foregoing method embodiments is implemented.

An embodiment of this application further provides a network slice adjustment system, including the slice configuration network element and the terminal device in the foregoing method embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and there may be other division manners in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The foregoing embodiments may be wholly or partially implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the processes or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network slice adjustment method, comprising:
receiving, by a slice configuration network element, service experience information from a terminal device, wherein the service experience information comprises identifier information of a base station and identifier information of a network slice corresponding to a service, and the service experience information further comprises quality of service indicator information and/or service user experience information;
determining, by the slice configuration network element based on the service experience information, that the base station corresponding to an identifier of the base station cannot meet the service; and
adjusting, by the slice configuration network element based on a determining result that the base station cannot meet the service, a network slice supported by the base station.

2. The method according to claim 1, wherein the determining, by the slice configuration network element based on the service experience information, that the base station corresponding to an identifier of the base station cannot meet the service comprises:
receiving, by the slice configuration network element, network performance indicator information from a network slice management function network element, wherein the network performance indicator information comprises a success rate of establishing a protocol data unit PDU session by the network slice supported by the base station and/or resource utilization of the network slice supported by the base station; and
determining, by the slice configuration network element based on the service experience information and the network performance indicator information, that the base station cannot meet the service.

3. The method according to claim 1 or 2, wherein that the base station cannot meet the service comprises that the base station does not support the network slice corresponding to the service, or that network slice resources supported by the base station are insufficient.

4. The method according to claim 3, wherein when the base station does not support the network slice corresponding to the service, the adjusting, by the slice configuration network element, the network slice supported by the base station comprises:
generating, by the slice configuration network element for the base station, information used to support the network slice corresponding to the service; and
sending, by the slice configuration network element, the information used to support the network slice corresponding to the service.

5. The method according to claim 4, wherein the information used to support the network slice corresponding to the service comprises identifier information used to support the network slice corresponding to the service and/or resource configuration information used to support the network slice corresponding to the service, the identifier information used to support the network slice corresponding to the service comprises an identifier of the network slice supported by the base station and an identifier of an operator of the base station, and the resource configuration information used to support the network slice corresponding to the service comprises resource configuration of the network slice supported by the base station and/or a dedicated resource of the network slice supported by the base station.

6. The method according to claim 4 or 5, wherein the method further comprises:
receiving, by the slice configuration network element, response information of the information used to support the network slice corresponding to the service, wherein the response information of the information used to support the network slice corresponding to the service indicates that the base station has completed adjustment.

7. The method according to claim 3, wherein when the network slice resources supported by the base station are insufficient, the adjusting, by the slice configuration network element based on a case that the base station cannot meet the service, the network slice supported by the base station comprises:
generating, by the slice configuration network element for the base station, information used to allocate the network slice supported by the base station; and
sending, by the slice configuration network element, the information used to allocate the network slice supported by the base station.

8. The method according to claim 7, wherein the information used to allocate the network slice supported by the base station comprises identifier information used to allocate the network slice supported by the base station and/or resource configuration information used to allocate the network slice supported by the base station, the identifier information used to allocate the network slice supported by the base station comprises an identifier of the network slice supported by the base station and an identifier of an operator of the base station, and the resource configuration information used to allocate the network slice supported by the base station comprises resource configuration of the network slice supported by the base station and/or a dedicated resource of the network slice supported by the base station.

9. The method according to claim 7 or 8, wherein the method further comprises:
receiving, by the slice configuration network element, response information of the information used to allocate the network slice supported by the base station, wherein the response information of the information used to allocate the network slice supported by the base station indicates that the base station has completed adjustment.

10. The method according to claim 6 or 9, wherein after the receiving, by the slice configuration network element, response information of the information used to support the network slice corresponding to the service or response information of the information used to allocate the network slice supported by the base station, the method further comprises:
updating, by the slice configuration network element, a topological relationship of the service, wherein the topological relationship of the service comprises an association relationship among the identifier of the network slice corresponding to the service, an application identifier, the identifier of the base station, and an identifier of a core network element.

11. The method according to any one of claims 1 to 10, wherein the method further comprises:
sending, by the slice configuration network element to the terminal device, indication information for periodically sending the service experience information to the slice configuration network element.

12. The method according to claim 11, wherein the receiving, by a slice configuration network element, service experience information from a terminal device comprises:
periodically receiving, by the slice configuration network element, the service experience information from the terminal device.

13. The method according to claim 11 or 12, wherein the indication information comprises at least one of the following information of the terminal device:
a quality of service indicator, a service interruption indication, or a quantity of PDU session establishment failures.

14. The method according to any one of claims 1 to 10, wherein the method further comprises:
sending, by the slice configuration network element, threshold information to the terminal device, wherein the threshold information indicates to send the service experience information to the slice configuration network element when the quality of service indicator information and/or the service user experience information are/is lower than or equal to a preset threshold.

15. A network slice adjustment method, comprising:
generating, by a terminal device, service experience information, wherein the service experience information comprises identifier information of a base station and identifier information of a network slice corresponding to a service, and the service experience information further comprises quality of service indicator information and/or service user experience information; and
sending, by the terminal device, the service experience information to a slice configuration network element.

16. The method according to claim 15, wherein the method further comprises:
receiving, by the terminal device from the slice configuration network element, indication information for periodically sending the service experience information to the slice configuration network element.

17. The method according to claim 16, wherein the sending, by the terminal device, the service experience information to a slice configuration network element comprises:
periodically sending, by the terminal device, the service experience information to the slice configuration network element.

18. The method according to claim 16 or 17, wherein the indication information comprises at least one of the following information of the terminal device:
a quality of service indicator, a service interruption indication, or a quantity of PDU session establishment failures.

19. The method according to claim 15, wherein the method further comprises:
receiving, by the terminal device, threshold information from the slice configuration network element, wherein the threshold information indicates to send the service experience information to the slice configuration network element when the quality of service indicator information and/or the service user experience information are/is lower than or equal to a preset threshold.

20. A network slice adjustment apparatus, wherein the apparatus comprises a module configured to perform the method according to any one of claims 1 to 14, or a unit configured to perform the method according to any one of claims 1 to 14, or a module configured to perform the method according to any one of claims 15 to 19, or a unit configured to perform the method according to any one of claims 15 to 19.

21. A network slice adjustment apparatus, comprising:
a processor, configured to execute a computer program stored in a memory, so that the apparatus performs the method according to any one of claims 1 to 14 or any one of claims 15 to 19.

22. The apparatus according to claim 21, wherein the apparatus further comprises the memory.

23. A computer-readable storage medium, wherein the computer-readable storage medium stores a computer program, and when the computer program is run on a computer, the computer is enabled to perform the method according to any one of claims 1 to 14 or any one of claims 15 to 19.

24. A computer program product, wherein the computer program product comprises instructions for performing the method according to any one of claims 1 to 14 or any one of claims 15 to 19.

25. A network slice adjustment system, comprising a slice configuration network element and a terminal device, wherein
the slice configuration network element is configured to perform the method according to any one of claims 1 to 14,
and the terminal device is configured to perform the method according to any one of claims 15 to 19.
